Europäisches Patentamt

European Patent Office

Office européen des brevets

(19)

(11) EP 0 696 110 A1

(12) **DEMANDE DE BREVET EUROPEEN**

(43) Date de publication:
07.02.1996 Bulletin 1996/06

(51) Int Cl.6: **H04B 1/66**, G10L 7/06

(21) Numéro de dépôt: 95401817.2

(22) Date de dépôt: 02.08.1995

(84) Etats contractants désignés:
DE GB NL

(30) Priorité: 05.08.1994 FR 9409757

(71) Demandeurs:
• FRANCE TELECOM
F-75015 Paris (FR)

• TELEDIFFUSION DE FRANCE, société
anonyme
F-75015 Paris (FR)

(72) Inventeur: Charbonnel, Pierre
F-35830 Bettou (FR)

(74) Mandataire: Rodhain, Claude et al
F-75009 Paris (FR)

(54) **Procédé et dispositif de codage et de décodage sonore par compression fréquentielle, notamment pour application à une mémoire de masse sonore**

(57) Selon l'invention, un signal sonore de type numérique à coder est tout d'abord transposé dans le domaine spectral par une transformée de Fourier rapide. Le procédé de compression consiste à effectuer une compression fréquentielle sensiblement conforme à la courbe fréquences/tonies de l'oreille. L'oreille intègre des bandes critiques de fréquence dont les fréquences maximales sont sur la dite courbe. On compresse les échantillons spectraux de manière à ce que le nombre conservé par bande critique soit constant en moyenne.

L'invention concerne aussi un procédé d'expansion du signal ainsi compressé, ainsi qu'un dispositif de codage (12) et de décodage pour la mise en oeuvre du procédé.

Application notamment aux mémoires de masse sonore.

FIG_2

EP 0 696 110 A1

# EP 0 696 110 A1

## Description

La présente invention concerne un procédé de codage sonore par compression fréquentielle.

Elle concerne également un procédé de décodage sonore de signaux ainsi codés.

Elle concerne aussi des dispositifs de codage et de décodage numériques pour le codage et le décodage par compression fréquentielle.

Elle concerne enfin un support d'enregistrement d'informations sonores sur lequel lesdites informations sont codées selon le procédé de codage ci-dessus.

Les traitements numériques sonores modernes font appel à diverses techniques mettant en jeu, soit des paramètres prédictifs du signal (par exemple le codage du signal de type connu sous l'abréviation anglo-saxonne "ADPCM", c'est-à-dire "MIC" différentiel adaptable), soit des modèles psycho-acoustiques : par exemple du type "MUSICAM" (de l'anglo-saxon "Masking Coding And Multiplexing" : norme ISO/MPEG 11172-3). Dans ce dernier cas, ce sont principalement les effets de masque fréquentiels et temporels qui sont exploités.

Dans la majorité de ces traitements, que ce soit en vue d'une transmission ultérieure ou d'une mémorisation, on prévoit au moins une étape de compression, de manière à obtenir un débit de transmission le plus bas possible, un spectre de fréquences réduit ou une place mémoire minimale.

On connaît d'après l'article de Patrick, Steele et Xideas, paru dans "IEEE Transactions on communications", vol. COM-31, mai 1983, pages 692-701, et intitulé "Frequency Compression of 7.6 kHz Speech to 3.3 kHz Bandwidth", un traitement de signaux audio basé sur un procédé de compression de fréquence, pour des applications de codage de la parole. Le système décrit comporte quatre voies de compression fréquentielles, adaptées au mieux à la restitution des consonnes. Il s'agit d'un système essentiellement dépendant du signal. Le taux de compression obtenu est relativement faible : de l'ordre de deux à trois.

Il a été démontré par ailleurs que l'oreille étaient dotée de caractéristiques acoustiques remarquables. Elle possède notamment la faculté d'intégrer certaines zones de fréquences en bandes appelées "bandes critiques". Ces propriétés sont décrites dans l'ouvrage de E. Zwicker et R. Feldkeller intitulé : "Das Ohr Narichterempfanger" ("Psycho-acoustique - L'oreille récepteur d'informations"), traduit de l'Allemand par Christel Sorin, Collection ENST - Editions MASSON.

Il a été montré que ces bandes sont au nombre de vingt-quatre, étagées de 20 Hz à 16000 Hz environ.

La hauteur tonale perçue z (exprimée en tonies) est une fonction de la fréquence f (en Hertz) sensiblement linéaire jusqu'à 500 Hz et logarithmique au-delà. Il est à remarquer que les fréquences limites (maximales) des bandes critiques se trouvent exactement sur la courbe de tonies précédemment décrite.

On a défini une unité de hauteur tonale, le mel 100 mels correspondant à la largeur d'une bande critique. Il y a donc 2400 mels pour 16000 Hz.

Le TABLEAU I, placé en fin de la présente description, résume les caractéristiques principales de ces bandes critiques. Ce tableau est tiré de l'ouvrage précité. On a porté le numéro de bande No (allant de 1 à 24), la fréquence centrale $F_C$ (en Hz), la largeur de bande df (en Hz) et la fréquence maximale $F_{max}$ (en Hz).

L'invention va tirer partie des caractéristiques acoustiques de l'oreille qui viennent d'être rappelées. Elle s'appuie sur une caractéristique de l'audition, qui est la relation non linéaire entre les fréquences du signal audio et les hauteurs tonales perçues.

L'invention propose un procédé de codage numérique sonore par compression de fréquence, ce procédé effectuant une approximation de la courbe fréquences/tonies.

Par ce procédé on peut obtenir un taux de compression élevé, typiquement supérieur à sept, et pouvant dépasser douze lorsqu'on utilise des fréquences d'échantillonnage élevées, par exemple 32 kHz.

L'objectif que se fixe l'invention est, pour les applications impliquant une transmission de signal sonore, un faible débit et une transmission correcte, et pour les applications impliquant une mémorisation, une occupation réduite de l'espace mémoire utilisable.

Dans ce qui suit, pour fixer les idées, sans que cela soit limitatif en quoi que ce soit de la portée de l'invention, on considérera ce dernier type d'application, et de façon plus précise l'insertion d'un signal sonore dans un signal vidéo, le signal composite étant enregistré sur un disque vidéo en mode interactif connu sous l'abréviation anglo-saxonne "CAV" ("Constant Angular Velocity" ou vitesse angulaire constante)

L'invention a donc pour objet un procédé de codage numérique sonore par compression fréquentielle de signaux audio situés dans une bande de fréquences de largeur déterminée, caractérisé en ce qu'il comprend au moins les étapes suivantes :

- décomposition de la bande de fréquence de largeur déterminée en bandes de fréquences adjacentes, dénommées "plages de fréquences", la largeur de chacune de ces "plages de fréquences" étant déterminée de telle sorte que lui soit associée, par application de la courbe fréquence-tonie de l'oreille humaine, une plage de hauteur tonale déterminée identique pour chacune desdites "plages de fréquences",

- conversion desdits signaux audio en échantillons spectraux à répartition homogène et distants d'un pas de fréquence constant, chaque "plage de fréquences" étant ensuite approximée par détermination d'une largeur la plus voisine de ladite plage et ayant une valeur multiple dudit pas de fréquence constant,

- et compression fréquentielle par création de segments de fréquences constituées chacun par une plage de fréquence approximée ou plusieurs de ces plages contiguës, et conservation dans chacun desdits segments d'un nombre déterminé d'échantillons spectraux conformément à une loi préétablie, définissant un pas de décimation propre à chaque segment,

l'ensemble des échantillons restants constituant des échantillons spectraux compressés.

L'invention à encore pour objet un procédé de décodage d'un signal numérique obtenu par ce procédé de codage.

L'invention a encore pour objet un dispositif de codage numérique d'un signal sonore selon le procédé ci-dessus et un dispositif de décodage du signal ainsi codé.

L'invention a enfin pour objet un support d'enregistrement d'informations sonores caractérisé en ce que lesdites informations sont codées selon le procédé de codage ci-dessus.

L'invention sera mieux comprise et d'autres caractéristiques et avantages apparaîtront à la lecture de la description qui suit en référence aux figures annexées, et parmi lesquelles :

- La figure 1a illustre schématiquement une chaîne d'enregistrement d'un son audio dans un signal vidéo, comportant des circuits de codage numérique selon le procédé de l'invention;

- La figure 1b illustre schématiquement une chaîne de lecture d'un signal audio inséré dans un signal vidéo codé selon le procédé de l'invention;

- La figure 2 illustre de façon plus détaillée un dispositif de codage selon le procédé de l'invention;

- La figure 3 est un organigramme explicitant le procédé de codage selon l'invention;

- La figure 4 illustre de façon plus détaillée des circuits d'expansion utilisés dans la chaîne de lecture de la figure 1b;

- La figure 5 est un organigramme explicitant le fonctionnement des circuits d'expansion;

- La figure 6 est un diagramme explicitant l'expansion des signaux codés selon le procédé de l'invention;

- La figure 7 est un diagramme illustrant la courbe fréquences/tonies.

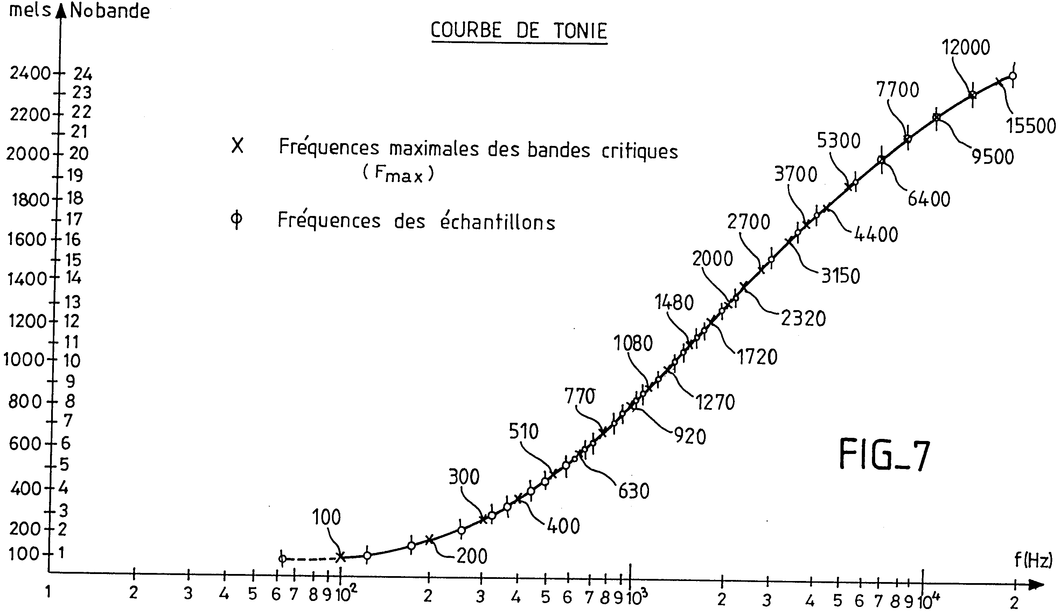

Un des caractéristique essentielles du procédé de codage selon l'invention est d'effectuer une compression fréquentielle conforme à la courbe fréquences/tonies représentée par la figure 7. On a gradué l'axe des coordonnées en mels, d'une part, et en numéro de bande critique d'autre part, puisqu'une bande critique correspond à 100 mels. L'échelle des graduations est linéaire. L'échelle des abscisses est logarithmique.

Si on se reporte de nouveau au TABLEAU I placé en fin de la présente description, on peut tirer de celui-ci les caractéristiques principales suivantes :

- la largeur des bandes critiques varie de 100 à 3500 Hz;

- le seuil de discrimination varie de 1 à 35 Hz/mel, puisque chacune de ces bandes correspond à 100 mels; le seuil dépassant 10 Hz/mel à partir de 5300 Hz.

Ce TABLEAU I va permettre d'établir la table de conversion fréquences/tonies.

Dans la réalité, la compression fréquentielle conforme à la courbe fréquences/tonies n'est pas réalisable de façon absolue. Il sera nécessaire d'effectuer des approximations visant à ce rapprocher de la courbe précitée. Le degré de précision est fonction, notamment de la fréquence d'échantillonnage et des caractéristiques des divers composants utilisés pour réaliser le codage numérique sonore par compression fréquentielle selon le procédé de l'invention.

Pour effectuer la conversion fréquence/tonie exigée par le procédé de l'invention, il est nécessaire de passer dans le domaine spectral. Cette étape préliminaire est réalisée avantageusement en ayant recours à une transformée de Fourier rapide ou "FFT" selon l'abréviation anglo-saxonne. Comme il le sera indiqué ci-après, dans un exemple de réalisation pratique, on effectue cette transformée de Fourier rapide toutes les 16 millisecondes. Il est donc nécessaire de transmettre 62,5 fois par seconde les échantillons fréquentiels. Les blocs transformés comprennent 256 échantillons espacés de 62,5 Hz, soit 16000 Hz..

En pratique toujours, on se limite le plus souvent à un nombre d'échantillons inférieur à cette valeur. Si on admet que la fréquence de coupure des signaux sonores à coder n'excède pas 8000 Hz, il est alors suffisant de considérer 128 échantillons, ou nombre d'échantillon utiles.

On va donc effectuer (opération d'"'écriture") des approximations de façon à s'approcher d'une courbe continue par un certain nombre de segments proches des fréquences critiques de la manière précisée ci-après. Pour ce faire, on va supprimer un certain nombre d'échantillons spectraux, le nombre d'échantillons supprimés dépendant du segment considéré. Lors de la restitution (opération de "lecture"), on va les reconstituer par une interpolation à pas variable selon les segments considérés.

Pour fixer les idées, on va se placer dans un exemple de réalisation concret ayant les caractéristiques suivantes :

- fréquence d'échantillonnage : 16000 Hz

- Bande passante :       6400 Hz

- Conversion linéaire 12 bits et compression logarithmique ("loi A") 8 bits, du type G711 du CCITT;

- Transformée de Fourier Rapide ("FFT") sur des blocs de 16 millisecondes (256 échantillons);

- Conversion fréquence/tonie 256-30 points;

- Transformée de Fourier inverse rapide ("FFT$^{-1}$") et reconstitution des blocs de 16 millisecondes avec une fréquence d'échantillonnage de 16000 Hz.

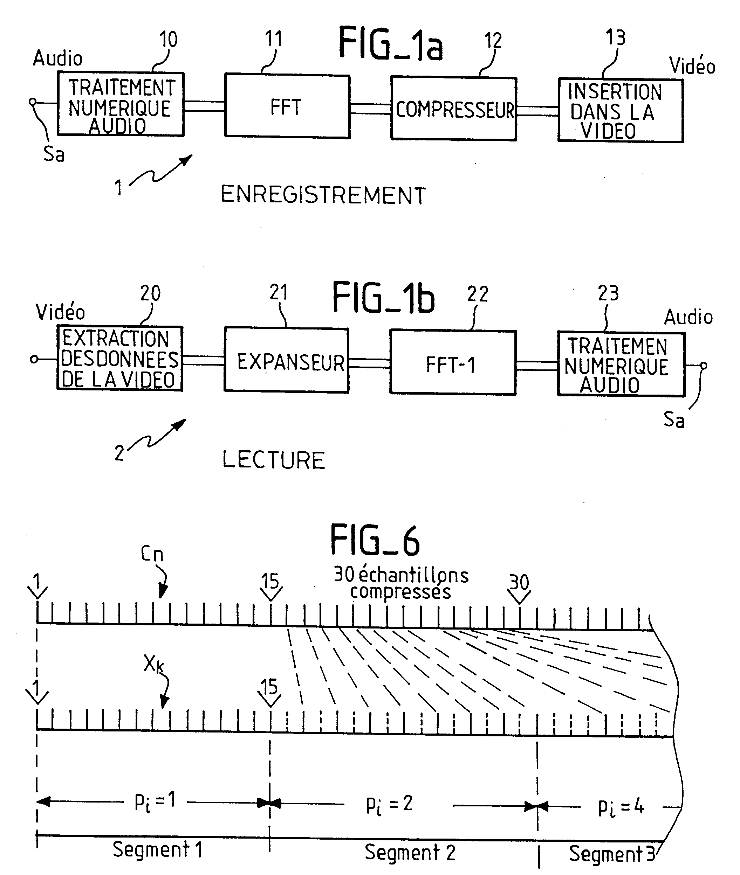

La figure 1a illustre schématiquement une chaîne d'enregistrement 1 de signaux audio $S_a$, après codage selon le procédé de l'invention, par exemple dans une mémoire optique 13, et plus particulièrement l'enregistrement des signaux codés, après insertion dans une composante vidéo, sur un disque optique interactif, comme il a été indiqué.

L'architecture générale de la chaîne 1, en soi, est connue.

Elle comprend classiquement des circuits 10 de pré-traitement des signaux sonores, ou plus généralement audio, $S_a$. On suppose que ces signaux sont présentés en entrée sous forme analogique. Les circuits 10 de pré-traitement consistent essentiellement en un filtre passe-bas, un convertisseur analogique-numérique et un compresseur logarithmique (non représentés), disposés en cascade. Dans l'exemple considéré, le filtre est un filtre passe-bas de fréquence de coupure 7 kHz, le convertisseur analogique-numérique est du type 12 bits et le compresseur logarithmique réalise une compression "loi A" de 12 à 8 bits. Ces composants sont disponibles sur le marché, sous forme de circuits intégrés, par exemple les circuits du MC 14400 et MC 145500 (distribués par la firme MOTOROLA) ou TP 3075 et TP 5116 (NATIONAL SEMICONDUCTORS).

Le signal à coder est présenté, sous forme binaire parallèle (8 bits), à l'entrée de circuits 11 effectuant une transformée de Fourier rapide "FFT". Ce type de circuits est également classique. Dans l'exemple considéré, il s'agit d'un circuit 16 bits, permettant une transformée de 1024 points, en moins d'une milliseconde. A titre d'exemple, le circuit référencé TMC 2310 distribué par la firme TRW convient parfaitement à cet usage.

Les circuits 11 génèrent des blocs de 256 échantillons fréquentiels qui sont présentés aux circuits compresseurs 12, mettant en oeuvre le procédé de compression selon l'invention.

On appellera dans ce qui suit $f_P$ la fréquence de pas de chaque échantillon et n son rang. La fréquence de l'échantillon est donc $[f_P \times n]$. Selon une des caractéristiques importantes du procédé de l'invention, cette fréquence $[f_P \times n]$ est comparée aux fréquences maximales des bandes critiques, fréquences maximales $F_{max}$ tirées du TABLEAU I placé en fin de la présente description. Lorsque les bandes critiques consécutives n'ont pas une largeur de bande très différente, il est considéré qu'elles ont le même pas de décimation.

Plus précisément, le procédé de l'invention part de la constatation qu'il y a une relation très étroite entre la tonie et l'échelle que forme les bandes critiques juxtaposées. Les fréquences $F_{max}$ du TABLEAU I, qui correspondent aux fréquences supérieures de chaque bande, se situent exactement sur la courbe de tonie. Ces fréquences ont été reportées sur la courbe "fréquences-tonies" représentée par la figure 7 (symboles "$\times$" sur cette courbe). Comme il a été indiqué, ces fréquences sont au nombre de 24.

Selon l'invention, on conserve seulement certains échantillons spectraux, ce de manière à ce que le nombre d'échantillon par bande critique soit constant.

Cependant, cette sélection ne peut être réalisée de façon rigoureuse, car généralement le pas de fréquence n'est pas un multiple ou un sous-multiple exact de 100, qui est la largeur de bande dans la partie linéaire de la courbe. C'est le cas dans l'exemple illustré puisque le pas de fréquence est égal à 62,5 Hz.

Pour pallier cette difficulté d'ordre pratique, on établit une table de compression dans laquelle, pour chacune des classes d'échantillons i, la moyenne doit la plus proche possible d'une valeur multiple de 100. Dans l'exemple illustré, on établit les limites de la façon suivante :

| de | à | (Hz) | $df_{max} =$ | $p_i =$ |
|---|---|---|---|---|
| 50 | | 510 | 100 | 1 |
| 510 | | 920 | 150 | 2 |
| 920 | | 1720 | 240 | 4 |
| 1720 | | 2320 | 320 | 5 |
| 2320 | | 3150 | 450 | 7 |
| 3150 | | 3700 | 550 | 9 |
| 3700 | | 4400 | 700 | 11 |
| 4400 | | 5300 | 900 | 14 |
| 5300 | | 6400 | 1100 | 17 |

Dans l'exemple ci-dessus, on se limite à la bande de fréquences utile précitée.

En outre, selon un mode de réalisation préféré, tenant compte du fait que l'intelligibilité, pour un signal audible par l'oreille humaine, est portée par les médiums, c'est-à-dire par une bande de fréquences s'étendant de 900 Hz à 2000 Hz environ, la répartition ci-dessus est avantageusement pondérée de la manière suivante :

| de | à | (Hz) | $p_i =$ |
|---|---|---|---|
| 50 | | 900 | 1 |
| 920 | | 1720 | 2 |
| 1720 | | 2320 | 4 |

Pour des raisons pratiques, on a en outre arrondi en retenant des valeurs multiples de 62,5 Hz.

Le TABLEAU II, placé en fin de la présente description, montre les résultats obtenus dans le cas de l'exemple pratique considéré, à savoir le cas de blocs de transformée de Fourier rapide "FFT" de 256 échantillons, avec une fréquence d'échantillonnage de 16000 Hz.

Dans le TABLEAU III, placé en fin de la présente description, on a regroupé les fréquences maximales $F_{max}$ des bandes critiques et les fréquences $F_{éch}$ des échantillons spectraux retenus conformément à ce qui vient d'être explicité.

Les fréquences des échantillons retenus sont également portées sur la courbe "fréquences-tonies" représentée sur la figure 7 (symboles "φ" sur la courbe).

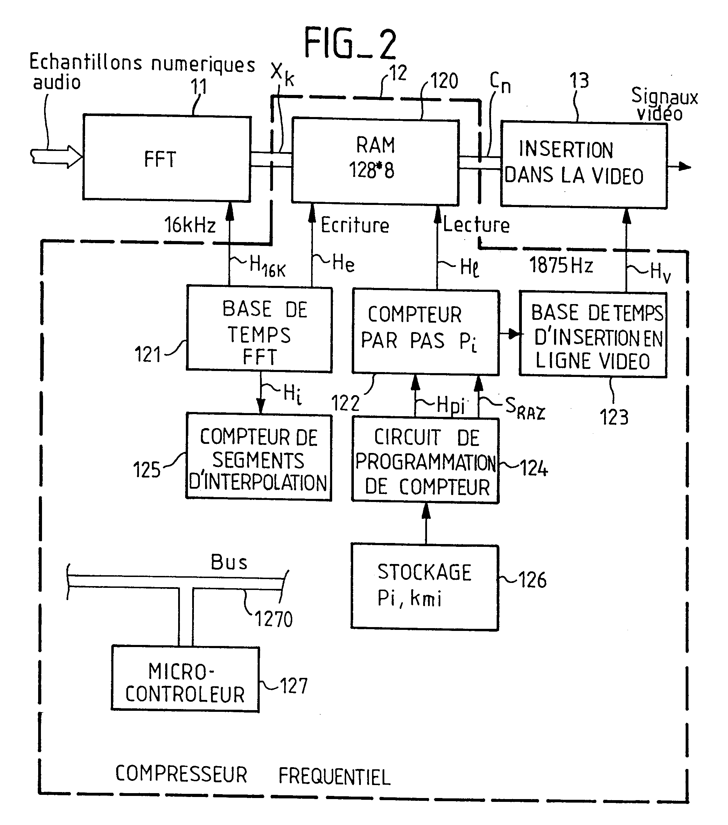

La figure 2 illustre un exemple de réalisation du circuit 12 de compression fréquentielle pour la mise en oeuvre du procédé de codage selon l'invention.

Les circuits 12 reçoivent en entrée les échantillons spectraux $X_k$ générés par les circuits "FFT" 11 et délivrent en sortie les échantillons compressés $C_n$.

L'élément principal des circuits 12 est constitué par une mémoire à accès aléatoire 120 ou "RAM" selon la terminologie anglo-saxonne, fonctionnant en tant que registre à décalage selon un mode dit "FIFO" ou "premier entré - premier sorti". Cette mémoire a une capacité de 128×8 bits, les mots binaires étant, dans l'exemple illustré, des mots parallèles de 8 bits. Elle comporte un port d'entrée et un port de sortie, indépendants l'un de l'autre et commandés par des signaux de cadencement (horloges) également indépendants.

On a inclus, dans les circuits 12, un microcontroleur 127 ou organe de commande numérique programmé similaire. Celui-ci commande, de façon classique les éléments des circuits 12, ainsi d'ailleurs que les autres circuits du dispositif selon l'invention. Pour ce faire, il transmet et reçoit des signaux d'information et des instructions par l'intermédiaire d'un bus 127. Les liaisons habituelles d'alimentation électrique et de signaux d'horloge n'ont pas été représentées.

Les circuits 12 comprennent une base de temps 121 générant des signaux d'horloge $H_{16K}$, cadencés à 16 kHz, qui sont transmis aux circuits "FFT" 11, pour la synchronisation de ces circuits sur cette fréquence d'échantillonnage, et générant des seconds signaux d'horloge $H_e$, cadencés à 16 kHz qui sont transmis à la mémoire "FIFO" 120, permettant l'écriture des échantillons $X_k$, c'est-à-dire leur introduction en entrée dans cette cette mémoire. La base de temps 121 délivre enfin des signaux d'horloge $H_i$ transmis à un compteur de segments d'interpolation 125 qui lui-même pilote un circuit de programmation de compteur 124. Celui-ci reçoit en entrée des informations en provenance d'une mémoire 126, stockant les différentes valeurs des pas d'interpolation $P_i$ et des valeurs maximales des adresses $Km_i$ des échantillons d'entrée, par classes de compression. Avantageusement, la mémoire 126 sera une mémoire à lecture seule, fixe ("ROM") ou programmable ("PROM"). Ces valeurs servent à programmer un compteur de pas $P_i$, 122, par l'intermédiaire du circuit de programmation 124, qui génère des signaux d'horloge "troués" $Hp_i$, et sont représentatives de la table de compression précitée. Le circuits 124 génère également un signal de remise à zéro ou réinitialisation, $S_{RAZ}$, du compteur de pas 122. Celui-ci génère sur sa sortie un signal d'horloge $H_1$ permettant la lecture des seuls échantillons sélectionnés en sortie de la mémoire 120, selon le programme élaboré par les circuits de programmation 124. Il s'agit donc d'une lecture sélective. Les échantillons lus en sortie sont les échantillons compressés $C_n$ selon le procédé de l'invention, puisque la sélection obéit à la table de compression précitée. Le compteur de pas 122 pilote en outre une seconde base de temps 123, servant à générer des signaux d'horloge $H_v$, cadencés à 1875 Hz dans l'exemple illustré, et transmis aux circuits 13 pour rythmer l'insertion des échantillons compresser $C_n$ dans les lignes vidéo. Tous ces éléments de circuits sont des circuits classiques, disponibles dans le commerce : compteurs, compteurs programmables, mémoires, etc. ou peuvent être réalisés sous forme de circuits spécifiques personnalisés, par exemple selon la technologie dite "ASIC"

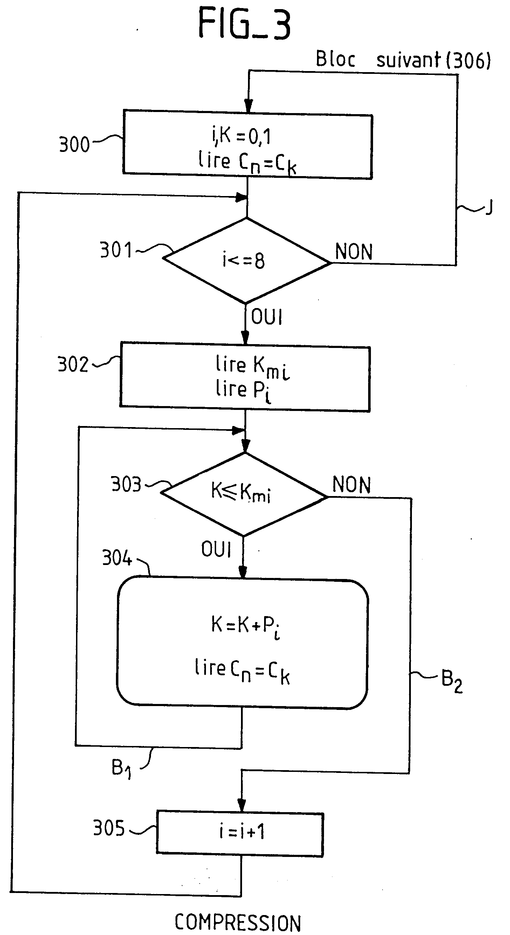

L'organigramme de la figure 3 explicite les étapes du procédé de compression selon l'invention et, de ce fait, le fonctionnement des circuits 12, étant bien entendu que la table de conversion telle qu'elle résulte du TABLEAU II précité est établie lors d'une étape préliminaire et enregistrée par l'intermédiaire des valeurs $P_i$ et $Km_i$ dans la mémoire 126, ce en fonction des caractéristiques de l'application : fréquence de coupure du signal audio, fréquence d'échantillonnage notamment. Ayant fixé la fréquence de coupure à 6400 Hz dans l'exemple considéré, le nombre d'échantillons à compresser est de 102. ce nombre explique la valeur 128 positions de mémoires (128×8 bits) choisie pour la mémoire "FIFO" 120 : il s'agit d'un multiple de $2^n$ (soit $2^7$). Il s'ensuit, qu'à la sortie du compresseur 12, seuls les groupes de pas $n_1$ à $n_8$ seront transmis, soit au total 30 pas, correspondant à une fréquence maximale de 6400 Hz.

Dans cet organigramme, les variables ci-dessous sont utilisées :

- $Km_i$ est la valeur maximale de K par classe de compression, avec $Km_i \in \{15, 29, 37, 53, 60, 71, 85, 102\}$ ;

- K est l'adresse de l'échantillon d'entrée (1 à 102 dans l'exemple considéré)

- $p_i$ est le pas adopté pour chacun d'eux, avec $pi \in \{1, 2, 4, 7, 9, 11, 17\}$; n est l'adresse de l'échantillon compressé (1 à 30 dans l'exemple considéré);

- $C_n$ est l'échantillon de sortie compressé.

Le procédé comprend des étapes itératives selon deux boucles principales $B_1$ et $B_2$, imbriquées.

A l'étape 300, les variables d'indexation i et K sont initialisées aux valeurs 0 et 1, respectivement. La première valeur de $C_n$, soit $C_1$, est lue. A l'étape 301, un test de comparaison est effectué entre la valeur du pointeur i et la valeur maximale qu'il peut atteindre, soit 8 dans l'exemple considéré. Lorsque la valeur maximale est atteinte, le bloc suivant d'échantillons $X_k$ est traité (étape 306), ce avec ré-initialisation des variables en 300.

A l'étape 302, les valeurs de $Km_i$ et $P_i$ sont lues, à l'adresse indiquée par le pointeur i, dans la mémoire 126.

A l'étape 303, un test de comparaison est effectué entre la valeur du pointeur K et la valeur maximale qu'il peut atteindre dans la classe de compression, soit $Km_i$. Le pointeur d'adresse K est incrémenté de la valeur de $P_i$ et l'échantillon $C_n = C_k$ est lu à l'adresse K. Dans l'exemple de réalisation, décrit en relation avec la figure 3, l'échantillon $C_n$ est lu en sortie de la mémoire "FIFO" 120, au coup d'horloge correspondant à cette adresse K. Tant que la valeur $Km_i$ n'est pas atteinte, la boucle $B_1$ est exécutée : étapes 303 et 304. Par contre, lorsque la valeur maximale est atteinte, la boucle $B_2$ est exécutée. Cette boucle $B_2$ comprend l'étape 305 : incrémentation du pointeur i de la valeur +1 et, de nouveau, les étapes 301 et 302. Notamment, à l'étape 302, des nouvelles valeurs de $Km_i$ et $P_i$ sont lues, à l'adresse indiquée par le pointeur i, dans la mémoire 126.

Les étapes itératives de la boucle $B_1$ sont de nouveau exécutées tant que l'adresse K, incrémentée de la nouvelle valeur lue $Km_i$, reste inférieure à la nouvelle valeur maximale $Km_i$ pour la classe de compression considéré.

Dans l'exemple choisi, la bande de fréquence a été limitée à 6400 Hz. Le nombre d'échantillons spectraux $X_k$ utile est donc de 102, le 103 ème échantillon se situant légèrement au-delà de 6400 Hz. Le nombre d'échantillons comprimé $C_n$ en sortie est égal à 26 pour une bande de fréquences des signaux audio s'étalant de 300 Hz à 6400 Hz. Le rapport est donc de 102/26, soit 3,92.

D'autre part, comme il a été indiqué, un codage logarithmique est effectué en pré-traitement. Selon ce codage, les échantillons sont regroupés par blocs de 32 et codés en fonction du segment correspondant à l'échantillon de plus grande amplitude. La longueur moyenne des mots échantillons est de 6. Le taux de compression par bloc, à ce stade, est d'environ 2. Il s'ensuit que le taux global de compression est égal à 3,92×2, soit 7,84. Le nombre de bits par échantillon passe donc de 12 à 1,53.

Le procédé de l'invention permet d'obtenir un taux de compression total supérieur à 7. Ce taux aurait d'ailleurs été beaucoup plus important si toute la bande passante (16000 Hz) avait été utilisée.

La figure 1b illustre une chaîne de lecture 2 de signaux audio codés selon le procédé de l'invention. En se plaçant de nouveau dans l'exemple d'application considéré, c'est-à-dire l'insertion de signaux audio dans des signaux vidéo, les données les représentant doivent tout d'abord être extraites de la composante vidéo. Cette opération est réalisée par les circuits 20, qui sont des circuits classiques bien connus de l'homme de métier. Si les signaux audio ont été enregistrés sous forme analogique, ils sont reconvertis en signaux binaires par un convertisseur analogique-numérique. Les signaux sont restitués sous forme binaire parallèle, de largeur 8 bits et au rythme de 1875 Hz, dans l'exemple considéré.

Un circuit expanseur 21 réalise une interpolation linéaire de manière à restituer en sortie le même nombre d'échantillons par bloc qu'en écriture.

Une transformation de Fourier rapide inverse "FFT$^{-1}$" est effectuée ensuite par les circuits 22. Cette opération peut être réalisée avantageusement par le même circuit intégré que celui utilisé pour la transformée de Fourier rapide directe "FFT" (figure 1a : 11). Un signal de commande commute ces circuits d'une fonction à l'autre. Il peut être généré par le microcontrôleur 127 (figure 2). ce dernier commande avantageusement également les autres circuits de la chaîne de lecture de la figure 1b.

Enfin, par un traitement inverse à celui subi lors du pré-traitement en lecture (figure 1a : 10), on restitue le signal audio en sortie $S_a$. Les circuits de traitement numérique audio 23 comprennent à cette fin un convertisseur numérique-analogique et un décodeur logarithmique (non représentés).

Les circuits 20, 22 et 23 sont connus, en soi, et il est inutile de les décrire plus avant.

Par contre, le circuit d'expansion 21 présente des spécificités propres à l'invention.

Si $X_k$ est la composante spectrale d'ordre $k$, $p_i$ le pas d'interpolation et u le rang de l'échantillon interpolé, avec 1 $<u<p_i$ alors la relation suivante doit être vérifiée :

$$|X_k+u|=|X_k|+(\frac{u}{p_i})(|X_k+1|-|X_k|)$$

De façon pratique, le module d'un échantillon est obtenu en supprimant le bit de signal, placé en poids fort pour chaque échantillon. D'autre part, dans l'exemple illustré, la compression logarithmique des amplitudes, effectuée en 13 segments, fait que chacun des échantillons comporte un mot d'échelle de 3 bits et une mantisse de 4 bits, du type loi A (selon la norme G711 du CCITT). Dans l'exemple choisi, seul le mot d'échelle est pris en compte dans l'interpolation. Pour obtenir une meilleure interpolation en amplitude, il sera avantageux de restituer les échantillons temporels linéaires sur 12 bits avant d'effectuer la transformée de Fourier rapide "FFT".

A la sortie du circuit d'expansion 21, 256 échantillons sont restitués à la fréquence d'échantillonnage de 16000 Hz

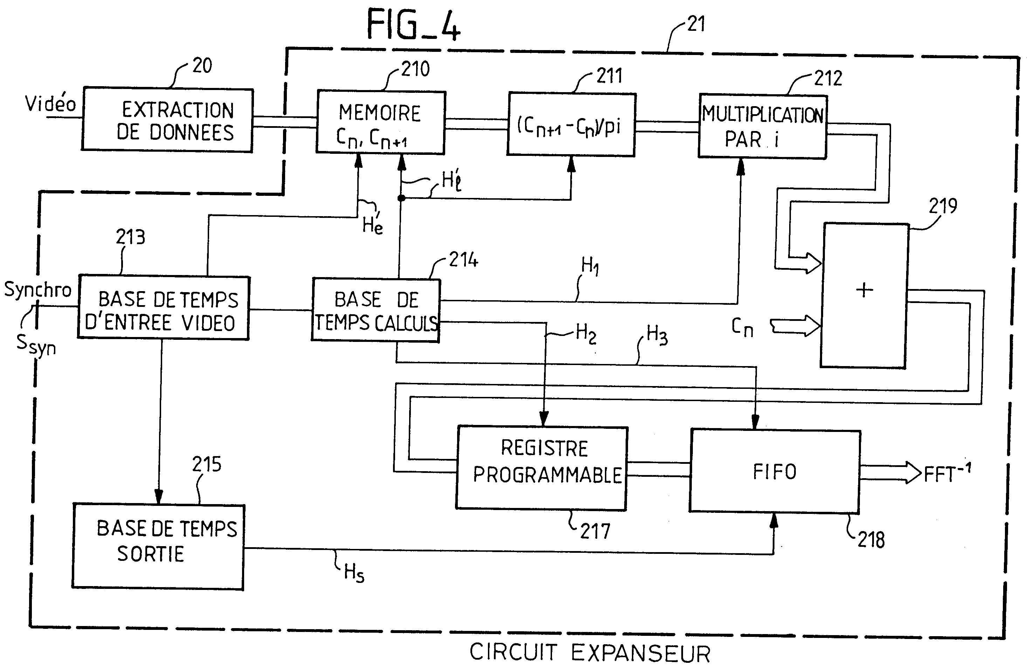

La figure 4 illustre de façon plus détaillée un exemple configuration possible des circuits d'expansion. Ils comprennent, en entrée, un registre 210 permettant la mémorisation de deux échantillons successifs, $C_n$ et $C_{n+1}$, extraits de la vidéo par les circuits 20, n étant l'indice de l'échantillon tel que 1 > n > $n_{max}$ ($n_{max}$ = 26 dans l'exemple illustré).

Un circuit de calcul 211 connu généralement sous l'appellation "ALU" (unité arithmétique et logique) effectue l'opération arithmétique suivante :

$$(C_n - C_{n+1})/p_{i;}$$

$p_i$ étant le pas de compression. Ce pas est connu de la table de compression et est enregistré dans une mémoire (non représentée). Cette mémoire peut d'ailleurs être avantageusement la mémoire 126 (figure 2), si les chaînes d'écriture (figure 1a) et de lecture (figure 1b) sont incorporées dans le même appareil.

Un circuit multiplicateur 212 multiplie ensuite le résultat obtenu par la valeur d'index $i$ associée au pas $p_i$. La valeur de $i$ est incrémentée de 0 à $i = P_{i-1}$ par un compteur (non représenté) compris dans les circuits arithmétiques et logiques 211.

Enfin un circuit additionneur 219 ajoute le résultat de cette dernière opération à la valeur $C_n$, obtenue à partir du registre 210. La sortie de l'additionneur 210 est reliée à l'entrée d'un registre programmable 217.

Ce registre est programmé par un signal de commande fonction de la valeur du pas $p_i$. Dans l'exemple considéré, le pas $p_i$ appartient à l'ensemble {1, 2, 4, 7, 9, 11, 17}, pour une fréquence de coupure de 6400 Hz. Dans le cas plus général (fréquence de coupure = 16000 Hz), le pas maximum est égal à 64. On choisira donc avantageusement un registre programmable dans la gamme 2 à 64.

Enfin une mémoire série de sortie 218 du type "premier entré - premier sorti", ou "FIFO", permet de restituer en sortie des signaux au rythme audio de 16 kHz, signaux transmis aux circuits 22 ("FFT$^{-1}$"). La mémoire 218 est d'un type similaire à celui de la mémoire 120 (figure 2) des circuits de compression 12 (figure 2).

La majorité des éléments constituant les circuits d'expansion selon l'invention sont de type séquentiel. On prévoit donc des circuits de génération des signaux d'horloge nécessaires. Dans l'exemple illustré, on peut distinguer trois circuits d'horloge ou de base de temps distincts. Une première base de temps primaire 213, pilotée par un signal de synchronisation approprié $S_{syn}$, génère un premier signal d'horloge $H'_e$ transmis au registre 210 de façon à permettre l'écriture et la mémorisation des échantillons spectraux extraits de la vidéo par les circuits 20. Cette base de temps 213 pilote à son tour une seconde base de temps 214 générant une deuxième série de signaux d'horloge, $H'_1$, $H_1$ et $H_2$, transmis aux organes de calculs 211 et 212 ainsi qu'au registre programmable 217. Plus particulièrement, le signal

d'horloge $H'_1$ permet la lecture, c'est-à-dire l'extraction, des échantillons compressés, $C_n$, $C_{n+1}$, hors de la mémoire 210 et leur introduction dans les organes de calcul 212. La seconde base de temps 214 génère un signal supplémentaire $H_3$ autorisant l'écriture des signaux présents sur la sortie du registre programmable dans la mémoire "FIFO" 218. La première base de temps 214 pilote également une troisième base de temps, 215, générant un signal d'horloge $H_S$ transmis au registre à décalage de sortie 218 et autorisant la sortie des signaux de la mémoire "FIFO" 218 en recréant le rythme des signaux audio $S_a$.

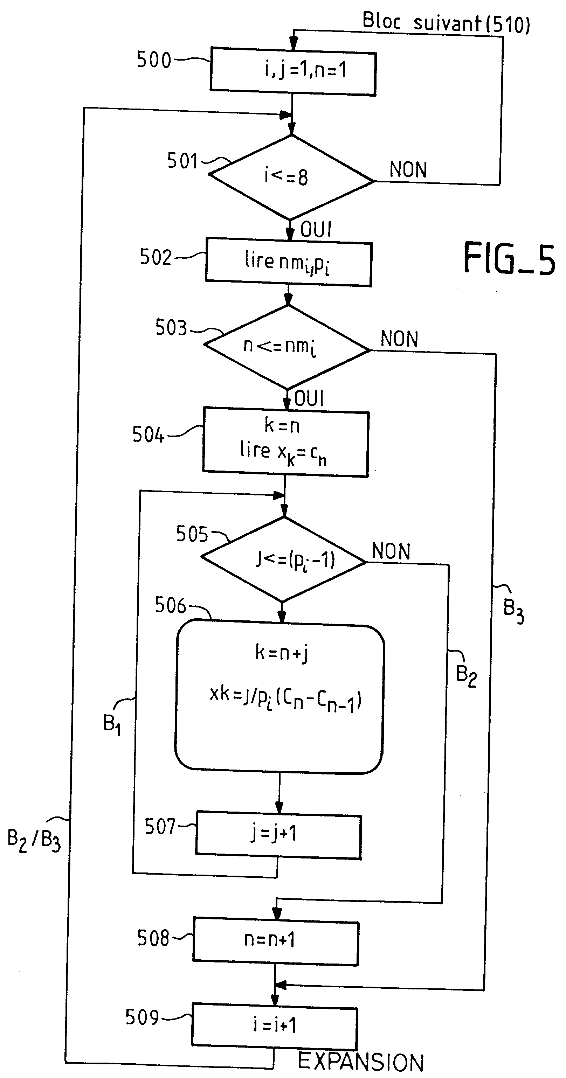

La figure 5 est un organigramme explicitant les principales étapes du processus d'expansion d'un signal compressé selon le procédé de codage de l'invention.

Dans cet organigramme, les variables ci-dessous sont utilisées :

- n est l'index associé au rang de l'échantillon de signal extrait de la vidéo, c'est-à-dire l'échantillon compressé $C_n$;

- $nm_i$ est la valeur maximale de n par classe d'interpolation, avec $nm_i \in \{15, 22, 24, 26, 27, 28, 29, 30\}$

- $p_i$ est le pas d'interpolation avec $p_i \in \{1, 2, 4, 7, 9, 11, 14, 17\}$

- i est le pointeur de $nm_i$, pouvant prendre les valeurs de 1 à 8 dans l'exemple illustré et j est une variable de travail.

Le procédés d'expansion comprend des étapes itératives selon trois boucles principales $B_1$ à $B_3$ imbriquées.

A l'étape 500, des variables i, j et n sont initialisées toutes trois à la valeur 1.

A l'étape 501, la valeur atteinte par le pointeur i est comparée à la valeur maximale permise, soit 8 dans l'exemple choisi. Si le test est positif, le bloc suivant est traité (étape 510), ce avec réinitialisation des variables d'index i, j et n, en 500.

A l'étape 502, les valeurs de $nm_i$ et $p_i$ sont lues à l'adresse indiquée par le pointeur i, c'est-à-dire pour la classe de compression en cours.

A l'étape 503, la valeur de la variable d'index n est comparée à la valeur maximale $mn_i$ permise dans la classe d'interpolation. Si le test est positif, un branchement est effectué vers l'étape 509 décrite ci-après (boucle $B_3$).

A l'étape 504, K est forcé à la valeur n et l'échantillon $X_k$ est 1u à l'adresse K = n, c'est-à-dire $X_k = C_n$.

A l'étape 505, la valeur de la variable j est comparé à la valeur $(p_i - 1)$. Si le test est positif, un branchement est effectué vers l'étape 508 décrite ci-après (boucle B2).

A l'étape 506, k est forcé à la valeur n + j et l'échantillon de sortie reconstitué $X_k$ est forcé à la valeur de l'échantillon $C_n = (j/p_i) \times (C_n - C_{n-1})$.

A l'étape 507, la valeur de j est incrémentée d'une unité et les étapes de lecture des échantillons se poursuivent (boucle $B_1$) jusqu'à ce que la condition du test de l'étape 505 ne soit plus satisfaite. Dans ce cas, comme indiqué ci-dessus, l'étape 508 est exécutée : la valeur de n est incrémentée d'une unité. Ensuite l'étape 509 est exécutée : la valeur de i est incrémentée d'une unité.

A la fin de cette étape, l'étape 501 est de nouveau exécutée et le test sur i réalisé. dans le cas où la condition prescrite ($1 \leq 8$ dans l'exemple illustré) est remplie, des nouvelles valeurs de $mn_i$ et $p_i$ sont lues à l'adresse i (étape 502). Les étapes 503 et 504 sont de nouveau réalisées avec ces nouvelles valeurs et le cycle des étapes de la boucle $B_1$ exécuté jusqu'à ce que le test de l'étape 505 ne soit plus rempli.

Le processus se poursuit jusqu'à ce que la valeur de i soit supérieure ou égale à la valeur maximale prescrite, soit 8 dans l'exemple illustré. Les échantillons $X_k$ sont lus aux adresses définies par les valeurs successives prises par K et représentent les échantillons spectraux reconstitués, en même nombre que les échantillons spectraux avnt compression, selon une répartition homogène de pas de fréquence $f_p$.

La figure 6 est un diagramme explicitant le processus d'expansion. Sur l'axe horizontal supérieur, on a représenté 30 échantillons spectraux compressés $C_n$ qui sont transmis à un rythme régulier (signal d'horloge $H'_e$ : figure 4) à la mémoire 210 (figure 4). Sur l'axe horizontal intermédiaire, on a représenté les échantillons spectraux en sortie des circuits expanseurs 12 (figure 4) et plus particulièrement de la mémoire "FIFO" 218 (figure 4). Les échantillons représentés en traits discontinus sont des échantillons interpolés. En effet, comme représenté partiellement sur l'axe horizontal inférieur, le pas de compression varie d'une classe de compression à l'autre. On a représenté trois segments avec $p_i$ = 1, 2 et 4, respectivement. Dans le premier segment, il y a correspondance biunivoque entre les échantillons spectraux compressés $C_n$ et les échantillons spectraux en sortie $X_k$ : pi = 1. Dans le second segment, pi = 2, lors de la compression, un échantillon sur deux seulement avait été conservé. Il est donc nécessaire d'en interpoler un sur deux pour pouvoir reconstituer le signal initial. Le processus se poursuit jusqu'à ce que les 30 échantillons compressés soient traités et les 102 échantillons originaux reconstitués.

L'exemple de réalisation qui vient d'être décrit peut s'adapter parfaitement à une chaîne de codage sonore (écriture-lecture) conforme à la norme G711 du CCITT. Dans ce cas, ce sont les 26 premiers échantillons espacés de 62,5 Hz qui sont retenus, ce qui correspond, pour un bloc "FFT" de 16 millisecondes, à un débit de $26 \times 8 \times 62,5 = 13000$

EP 0 696 110 A1

bits/s. Comme il a déjà été indiqué, le taux de compression est moins élevé lorsque la fréquence de coupure est plus faible.

Le procédé s'adapte également au codage sonore par blocs. Dans ce type de codage, le mot d'échelle retenu pour tout un bloc correspond à l'échantillon d'amplitude la plus élevée. Dans ce cas la transmission peut se faire de manière analogique, pour augmenter sensiblement la capacité sonore disponible. Par cette méthode, on pourra réaliser une mémoire de masse sonore de très grande capacité: typiquement plus de 1000 heures d'enregistrement par face de disque de 30 cm (12 pouces). Dans ce cas, seule la mantisse est traitée selon le système, le mot d'échelle étant traité numériquement. On transmet alors (1875 + 3) = 1878 échantillons par seconde. Il est alors possible d'effectuer un enregistrement de 1496 heures sur un vidéodisque interactif de 30 cm.

Dans la version qui vient d'être décrite de façon détaillée, le procédé selon l'invention peut être utilisé pour réaliser des mémoires sonores de très grande capacité, sur des disques inscriptibles, pour le contrôle "on line" de processus sonores. On peut le mettre en oeuvre pour d'autres usages : enregistrer les minutes de procès, dans les radiocommunications (canaux de sécurité). Les caractéristiques essentielles sont la capacité de stockage et l'inviolabilité des informations. Pour ce type d'application, un version "analogique" sera mieux adaptée en raison de la capacité accrue offerte.

Le procédé de codage a été décrit dans un contexte concernant un son dit de "moyenne qualité", la bande passante retenue, comme il a été indiqué étant de 6400 Hz environ. On peut cependant appliquer le procédé à d'autres types ou "qualités" de sons.

On distingue habituellement trois types de sons :

- le son dit "téléphonique (300-3400 Hz), utilisé pour la transmission de la parole;

- le son dit de "moyenne qualité", utilisé simultanément sur les Réseaux Numériques à Intégration de Services (ou RNIS, encore connus sous le sigle anglo-saxon ISDN) et les applications multimédias d'une part, et en radiodiffusion en modulation d'amplitude, d'autre part;

- et le son dit de "haute qualité" (40-15000 Hz), utilisé en radiodiffusion (modulation de fréquence) et pour le canal sonore en télévision.

La courbe fréquence-tonie, telle qu'illustré par le TABLEAU I placé en fin de la présente description, détermine la relation entre fréquence et hauteur tonale pour une bande passante d'environ 16000 Hz. Dans ce cas, il existe 24 plages de fréquence correspondant à une hauteur tonale de 100 mels chacune, et 12 segments correspondant chacun à une décimation déterminée : 9 segments jusqu'à 6400 Hz et 3 segments entre 6400 Hz et 16000 Hz (voir TABLEAU II).

Le TABLEAU II montre qu'il existe 30 pas jusqu'à 64000 Hz, et le TABLEAU I qu'il existe 4 plages, donc approximativement 4 pas supplémentaires jusqu'à 16000 Hz.

Le nombre d'échantillons compressés est donc de 30 + 4 = 34. Dans ce cas le taux de compression, qui est le rapport entre le nombre d'échantillons d'origine et le nombre d'échantillons compressés est de :

$$\frac{32000}{34*62,5} = 15$$

Pour un son dit de "moyenne qualité" (40-6400 Hz), il y a 20 plages de fréquences (voir TABLEAU I) et 9 segments (voir TABLEAU II). Le nombre d'échantillons compressés est de 30. Le taux de compression est donc de :

$$\frac{16000}{30*62,5} = 8,5$$

Enfin pour le son dit "téléphonique", il existe 10 plages de fréquences et 7 segments. Le nombre d'échantillons compressés est de 20 pour une bande passante de 330 à 3300 Hz. Le taux de compression est donc de :

$$\frac{8000}{20*62,5} = 6,4$$

Il doit être clair également que, bien que l'on ait utilisé la définition des fréquences critiques telles qu'elle ressort de l'ouvrage de E. ZWICKER précité, l'invention n'est nullement limitée à cette seule définition. On peut utiliser tout découpage de la courbe de tonies en bandes d'écart d'ordonnées constantes sans sortir du cadre de l'invention. Un ensemble de plages de fréquences ayant le même pas de décimation $p_i$ constitue un segment.

Le procédé selon l'invention peut être aussi utilisé pour le codage de sons de "très haute qualité". Dans ce cas, le nombre d'échantillons "FFT" compressé doit être nettement supérieur : au moins égal au nombre de degrés de tonalité perceptibles par l'oreille, soit 620. Il est donc nécessaire d'effectuer une transformée de Fourier sur des blocs d'échantillons de 8 millisecondes, soit 384 échantillons temporels, et avec au minimum 2048 échantillons spectraux. Les circuits "FFT" classiques ne permettent pas d'obtenir une telle dissymétrie, à moins d'effectuer une interpolation de rang élevé.

Une solution alternative consisterait donc à réaliser une transformation de Fourier optique bidimensionnelle (par exemple à l'aide d'un transformateur "Smart Camera" de "Global Holonetics") et à effectuer ensuite une transformation non linéaire du plan de transformé, conforme simultanément à la loi de codage d'amplitude logarithmique (loi "A" ou "Mu"), et à la courbe fréquence/tonie.

Le procédé qui vient d'être décrit dans un contexte hybride (traitement numérique et insertion des échantillons analogiques dans la vidéo) peut donc être réalisé soit en mode "tout numérique" (insertion des échantillons dans une trame numérique), soit de manière intégralement analogique au moyen de transformateurs optiques ou électrooptiques.

Il doit d'ailleurs être clair que l'invention n'est pas limitée à une technologie particulière ni à des valeurs particulières liées aux signaux sonores et au traitement de ceux-ci : fréquence de coupure, fréquence d'échantillonnage, etc.

TABLEAU I

| No | $F_C$ (Hz) | df (Hz) | $F_{max}$ (Hz) |
|----|-----------|---------|----------------|
| 1 | 50 | 80 | 100 |
| 2 | 150 | 100 | 200 |
| 3 | 250 | 100 | 300 |
| 4 | 350 | 100 | 400 |
| 5 | 450 | 110 | 510 |
| 6 | 570 | 120 | 630 |
| 6 | 700 | 140 | 770 |
| 8 | 840 | 150 | 920 |
| 9 | 1000 | 160 | 1080 |
| 10 | 1170 | 190 | 1270 |
| 11 | 1370 | 210 | 1480 |
| 12 | 1600 | 240 | 1720 |
| 13 | 1850 | 280 | 2000 |
| 14 | 2150 | 320 | 2320 |
| 15 | 2500 | 380 | 2700 |
| 16 | 2900 | 450 | 3150 |
| 17 | 3400 | 550 | 3700 |
| 18 | 4000 | 700 | 4400 |
| 19 | 4800 | 900 | 5300 |
| 20 | 5800 | 1100 | 6400 |
| 21 | 7000 | 1300 | 7700 |
| 22 | 8500 | 1800 | 9500 |
| 23 | 10500 | 2500 | 12000 |
| 24 | 13500 | 3500 | 15500 |

TABLEAU II

| nombre de pas identiques $n_i$ | pas $p_i$ | Adresse k | Fréquence (Hz) |
|---|---|---|---|
| $n_1 = 15$ | 1 | 1 | 62,5 |
| | | 2 | 125,0 |
| | | 3 | 187,5 |
| | | 4 | 250,0 |
| | | 5 | 312,5 |
| | | 6 | 375,0 |
| | | 7 | 437,5 |
| | | 8 | 500,0 |
| | | 9 | 562,5 |
| | | 10 | 625,0 |
| | | 11 | 687,5 |
| | | 12 | 750,0 |
| | | 13 | 812,5 |
| | | 14 | 875,0 |
| | | 15 | 937,5 |
| $n_2 = 7$ | 2 | 17 | 1062,5 |
| | | 19 | 1187,5 |
| | | 21 | 1312,5 |
| | | 23 | 1437,5 |
| | | 25 | 1562,5 |
| | | 27 | 1687,5 |
| | | 29 | 1812,5 |
| $n_3 = 2$ | 4 | 33 | 2062,5 |
| | | 37 | 2312,5 |
| $n_4 = 2$ | 7 | 44 | 2750,0 |
| | | 51 | 3318,5 |
| $n_5 = 1$ | 9 | 60 | 3750,0 |
| $n_6 = 1$ | 11 | 71 | 4437,5 |
| $n_7 = 1$ | 14 | 85 | 5312,5 |
| $n_8 = 1$ | 17 | 102 | 6400,0 |
| $n_9 = 1$ | 27 | 123 | 7700,0 |

TABLEAU II (suite)

| nombre de pas identiques $n_i$ | pas $p_i$ | Adresse k | Fréquence (Hz) |
|---|---|---|---|
| $n_{10} = 1$ | 29 | 152 | 9500,0 |
| $n_{11} = 1$ | 40 | 192 | 12000,0 |
| $n_{12} = 1$ | 64 | 256 | 16000,0 |

TABLEAU III

| N° bande | $F_{max}$ (Hz) | $F_{éch}$ (Hz) | N° bande | $F_{max}$ (Hz) | $F_{éch}$ (Hz) |
|---|---|---|---|---|---|
| - | | 62,5 | - | | 1312,5 |
| 1 | 100 | | - | | 1437,5 |
| - | | 125,0 | 11 | 1480 | |
| - | | 187,5 | - | | 1562,5 |
| 2 | 200 | | - | | 1687,5 |
| - | | 250,0 | 12 | 1720 | |
| 3 | 300 | | - | | 1812,5 |
| - | | 312,5 | 13 | 2000 | |
| - | | 375,0 | - | | 2062,5 |
| 4 | 400 | | - | | 2312,5 |
| - | | 437,5 | 14 | 2320 | |
| - | | 500,0 | 15 | 2700 | |
| 5 | 510 | | - | | 2750,0 |
| - | | 562,5 | 16 | 3150 | |
| - | | 625,0 | - | | 3318,5 |
| 6 | 630 | | 17 | 3700 | |
| - | | 687,5 | - | | 3750,0 |
| - | | 750,0 | 18 | 4400 | |
| 7 | 770 | | | | 4437,5 |
| - | | 812,5 | 19 | 5300 | |
| - | | 875,0 | - | | 5312,5 |
| 8 | 920 | | 20 | 6400 | 6400,0 |
| - | | 937,5 | 21 | 7700 | 7700,0 |
| - | | 1062,5 | 22 | 9500 | 9500,0 |
| 9 | 1080 | | 23 | 12000 | 12000,0 |
| - | | 1187,5 | 24 | 15500 | |
| 10 | 1270 | | - | | 16000,0 |

**Revendications**

1. Procédé de codage sonore par compression fréquentielle de signaux audio situés dans une bande de fréquences de largeur déterminée, caractérisé en ce qu'il comprend au moins les étapes suivantes :

   - décomposition de la bande de fréquence de largeur déterminée en bandes de fréquences adjacentes, dénommées "plages de fréquences", la largeur de chacune de ces "plages de fréquences" étant déterminée de telle sorte que lui soit associée, par application de la courbe fréquence-tonie de l'oreille humaine, une plage de hauteur tonale déterminée identique pour chacune desdites "plages de fréquences",

   - conversion desdits signaux audio en échantillons spectraux ($X_k$) à répartition homogène et distants d'un pas de fréquence constant, chaque "plage de fréquences" étant ensuite approximée par détermination d'une largeur la plus voisine de ladite plage et ayant une valeur multiple dudit pas de fréquence constant,

   - et compression fréquentielle par création de segments de fréquences constituées chacun par une plage de fréquence approximée ou plusieurs de ces plages contiguës, et conservation dans chacun desdits segments d'un nombre déterminé d'échantillons spectraux ($C_n$) conformément à une loi préétablie, définissant un pas de décimation ($p_i$) propre à chaque segment,

   l'ensemble des échantillons restants constituant des échantillons spectraux compressés.

2. Procédé selon la revendication 1, caractérisé en ce que ladite bande de fréquence de largeur déterminée étant constituée par un spectre audio de largeur égale sensiblement à 16 khz, le nombre desdites "plages de fréquences" est égal à 24, et la hauteur tonale correspondant à chacune de ces plages est égale à 100 mels.

3. Procédé selon la revendication 2, caractérisé en ce que le nombre de segments de fréquences associés auxdites 24 "plages de fréquences" est égal à 12.

4. Procédé selon la revendication 1, caractérisé en ce que ladite bande de fréquence de largeur déterminée étant constituée par un spectre audio de largeur égale à sensiblement 6,4 khz, le nombre desdites "plages de fréquences" est égal à 20, et la hauteur tonale correspondant à chacune des plages est égale à 100 mels.

5. Procédé selon la revendication 4, caractérisé en ce que le nombre de segments de fréquences associé auxdites 20 "plages de fréquence" est égal à 9.

6. Procédé selon la revendication 1, caractérisé en ce que ladite bande de fréquence de largeur déterminée étant constituée par un spectre audio dit de "qualité téléphonique", de largeur sensiblement égale à 3,3 khz, le nombre de plages de fréquence est égal à 17 et la largeur tonale associée à chacune des plages est égale à 100 mels.

7. Procédé selon la revendication 6, caractérisé en ce que le nombre de segments de fréquences associés auxdites 17 "plages de fréquences" est égal à 4.

8. Procédé selon l'une quelconque des revendications 1 à 7, caractérisé en ce que ladite loi préétablie consiste à ne conserver qu'un nombre moyen constant d'échantillons spectraux ($C_n$) dans chacune desdites "plages de fréquences".

9. Procédé selon l'une quelconque des revendications 1 à 8, caractérisé en ce que ladite conversion est obtenue par mise en oeuvre d'une transformation de Fourier.

10. Procédé selon l'une quelconque des revendications 1 à 9, caractérisé en ce que lesdits signaux audio étant du type analogique, il est réalisé une étape préliminaire de conversion analogique - numérique suivi d'une compression préalable logarithmique loi A, selon la norme G711 du CCITT.

11. Procédé de décodage d'un signal audio codé selon l'une quelconque des revendications 1 à 10, caractérisé en ce qu'il comprend au moins une étape d'expansion des échantillons spectraux compressés ($C_n$), la dite expansion étant réalisée en effectuant une interpolation linéaire vérifiant la relation suivante :

$$|X_k + u| = |X_k| + \left(\frac{u}{p_i}\right)(|X_k + 1| - |X_k|),$$

relation dans laquelle $X_k$ est la composante spectrale d'ordre $k$, $p_i$ le pas d'interpolation, égal audit pas de décimation ($p_i$), et u le rang de l'échantillon interpolé, avec $1 < u < p_i$, de manière à reconstituer des échantillons spectraux ($X_k$) en nombre égal au nombre d'échantillons spectraux avant compression, selon une répartition homogène, et distants les uns des autres dudit pas de fréquence constant.

12. Procédé selon la revendication 11, caractérisé en ce qu'il comprend une étape ultérieure consistant en la transformée de Fourier inverse des échantillons spectraux ($X_k$), suivie d'une étape de décompression logarithmique loi A, selon la norme G711 du CCITT, et d'une étape de conversion numérique - analogique de manière à reconstituer ledit signal audio.

13. Dispositif de codage (1) numérique sonore par compression fréquentielle de signaux audio situés dans une bande de fréquences de largeur déterminée, codés conformément au procédé de codage selon l'une quelconque des revendications 1 à 10, caractérisé en ce qu'il comprend au moins des circuits de compression (12) d'échantillons spectraux, ces circuits comprenant au moins des moyens de mémorisation (120) fonctionnant selon le mode dit "premier entré - premier sorti", dont le nombre de positions mémoires est au moins égal au nombre desdits échantillons spectraux, des premiers moyens de cadencement (121) autorisant l'écriture séquentielle de tous lesdits échantillons spectraux ($X_k$) dans les moyens de mémorisation (121), des moyens de stockage (126) de paramètres ($P_i$, $Km_i$) définissant ladite loi déterminée, des moyens de comptage (122) autorisant la lecture sélective d'un nombre déterminés d'échantillons spectraux ($C_n$) hors desdits moyens de mémorisation (120) et des moyens de programmation (125, 124) de ces moyens de comptage (122), lesdits moyens de programmation (125, 124) étant commandés par lesdits moyens de stockage (126); les échantillons spectraux ($C_n$) lus sélectivement hors desdits moyens de mémorisation (121) constituant les échantillons spectraux compressés ($C_n$) selon ladite loi déterminée.

14. Dispositif de codage selon la revendication 13, caractérisé en ce que lesdits moyens de mémorisation sont constitués par une mémoire à accès aléatoire (121) comprenant une entrée d'écriture et une sortie de lecture, fonctionnant indépendamment l'une de l'autre, et des entrées d'horloge d'écriture et de lecture destinées à recevoir des signaux d'horloge ($H_e$, $H_1$), commandant lesdites entrées d'écriture et de lecture indépendantes, respectivement.

15. Dispositif selon la revendication 13, caractérisé en ce que les moyens de stockage de paramètres ($P_i$, $Km_i$) définissant la dite loi déterminée sont constitués par une mémoire fixe (125) dans laquelle sont mémorisées les valeurs des rangs ($Km_i$) des échantillons spectraux correspondant aux bornes desdites "plages de fréquences" et lesdits pas de décimation ($p_i$) associés aux segments de fréquences.

16. Dispositif de décodage d'un signal audio codé selon l'une quelconque des revendications 1 à 10, caractérisé en ce qu'il comprend au moins des circuits expanseurs (21) comprenant au moins des premiers moyens de mémorisation (210) pour le stockage, à chaque instant, de premier ($C_n$) et second ($C_{n+1}$) échantillons spectraux compressés consécutifs, des moyens de calcul (211, 212, 219) effectuant la soustraction de deux échantillons spectraux consécutifs ($C_n$, $C_{n+1}$), leur division par le pas de décimation ($p_i$) associé à ces échantillons, la multiplication par un nombre (i) représentant le rang associé à cedit pas de décimation ($p_i$) et l'addition au résultat obtenu dudit premier échantillon spectral ($C_n$) enregistré dans lesdits premiers moyens de mémorisation (210), des premiers moyens de cadencement (213) autorisant l'écriture séquentielle des échantillons compressés ($C_n$) dans lesdits premiers moyens de mémorisation (210), des seconds moyens de cadencement (214) autorisant la lecture séquentielle des échantillons compressés ($C_n$, $C_{n+1}$) hors desdits premiers moyens de mémorisation (210) et l'exécution des calculs dans lesdits moyens de calcul (211, 212, 219), des seconds moyens de mémorisation (217, 218), de type programmable, pilotés par les seconds moyens de cadencement (214) et délivrant en sortie des échantillons spectraux ($X_k$) en nombre égal aux nombre d'échantillons spectraux avant compression, de manière à reconstituer les échantillons spectraux issus de la conversion desdits signaux audio situés dans une bande de fréquences de largeur déterminée.

17. Dispositif selon la revendication 16, caractérisé en ce que les seconds moyens de mémorisation comprennent un registre programmable (217) dont la sortie est connectée à une mémoire à accès aléatoire (218) fonctionnant selon le mode dit "premier entré - premier sorti", dont le nombre de positions mémoires est au moins égal au nombre desdits échantillons spectraux ($X_k$) avant compression, ladite mémoire à accès aléatoire (218) comportant une entrée d'écriture et une sortie de lecture, fonctionnant indépendamment l'une de l'autre, et des entrées d'horloge d'écriture et de lecture destinées à recevoir des signaux d'horloge, commandant lesdites entrées d'écriture et de lecture indépendantes, respectivement, l'entrée d'horloge d'écriture étant pilotée par les seconds moyens de cadencement (214), et en ce qu'il comprend des troisièmes moyens de cadencement (215) autorisant la lecture des échantillons spectraux reconstitués ($X_k$) hors de ladite mémoire à accès aléatoire (218).

18. Support d'enregistrement d'informations sonores caractérisé en ce que lesdites informations sont codées selon le procédé de codage numérique conforme à l'une quelconque des revendications 1 à 10.

## FIG_1a

Audio

```
10                11              12               13
TRAITEMENT    →   FFT       →   COMPRESSEUR  →   INSERTION
NUMERIQUE                                        DANS LA
AUDIO                                            VIDEO
```

Sa

1 ↗

ENREGISTREMENT

Vidéo

## FIG_1b

Vidéo

```
20                21              22               23
EXTRACTION    →   EXPANSEUR  →   FFT-1        →   TRAITEMEN
DESDONNEES                                        NUMERIQUE
DE LA VIDEO                                       AUDIO
```

2 ↗

LECTURE

Audio

Sa

## FIG_6

$C_n$

30 échantillons compressés

$X_k$

$p_i = 1$      $p_i = 2$      $p_i = 4$

Segment 1     Segment 2     Segment 3

## FIG_2

Echantillons numeriques audio

$X_k$

11 — FFT

12 — 120

$C_n$

Signaux video

13 — INSERTION DANS LA VIDEO

RAM 128*8

16kHz — $H_{16K}$

Ecriture — $H_e$

Lecture — $H_\ell$

1875 Hz — $H_v$

121 — BASE DE TEMPS FFT

COMPTEUR PAR PAS $P_i$

123 — BASE DE TEMPS D'INSERTION EN LIGNE VIDEO

$H_i$

122

$H_{pi}$ — $S_{RAZ}$

125 — COMPTEUR DE SEGMENTS D'INTERPOLATION

CIRCUIT DE PROGRAMMATION DE COMPTEUR — 124

Bus

1270

STOCKAGE $P_i$, $kmi$ — 126

MICRO-CONTROLEUR — 127

COMPRESSEUR FREQUENTIEL

# FIG_3

Bloc suivant (306)

300 — $i,K = 0,1$
lire $C_n = C_k$

J

301 — $i <= 8$ — NON

OUI

302 — lire $K_{mi}$
lire $P_i$

303 — $K \leqslant K_{mi}$ — NON

OUI

304 — $K = K + P_i$

lire $C_n = C_k$

$B_2$

$B_1$

305 — $i = i+1$

COMPRESSION

## FIG_4

FIG_4

Vidéo → | EXTRACTION DE DONNÉES | ~20

~21 CIRCUIT EXPANSEUR

| MEMOIRE $C_n$, $C_{n+1}$ | ~210
| $(C_{n+1}-C_n)/pi$ | ~211
| MULTIPLICATION PAR $i$ | ~212

$H'_e$

$H'_\ell$

BASE DE TEMPS D'ENTRÉE VIDÉO | ~213

Synchro

$S_{syn}$

BASE DE TEMPS CALCULS | ~214

$H_1$

$H_2$   $H_3$

$C_n$

+ | ~219

REGISTRE PROGRAMMABLE | ~217

FIFO | ~218 → FFT$^{-1}$

BASE DE TEMPS SORTIE | ~215

$H_s$

EP 0 696 110 A1

Bloc suivant (510)

500 — $i, j = 1, n = 1$

501 — $i <= 8$ → NON

OUI

502 — lire $nm_i, p_i$

FIG_5

503 — $n <= nm_i$ → NON

OUI

504 — $k = n$
lire $x_k = c_n$

505 — $J <= (p_i - 1)$ → NON

$B_3$

506 — $k = n + j$

$xk = J/p_i (C_n - C_{n-1})$

$B_1$

$B_2$

507 — $j = j + 1$

$B_2 / B_3$

508 — $n = n + 1$

509 — $i = i + 1$

EXPANSION

20

COURBE DE TONIE

FIG_7

EP 0 696 110 A1

Office européen
des brevets

**RAPPORT DE RECHERCHE EUROPEENNE**

Numero de la demande

EP 95 40 1817

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 277 613 (DEUTSCHE THOMSON-BRANDT GMBH) 10 Août 1988 <br> * colonne 3, ligne 8 - colonne 4, ligne 49; figure 1 * <br> --- | 1,13,18 | H04B1/66 <br> G10L7/06 |
| A | US-A-5 265 219 (GERSON ET AL) <br> * colonne 1, ligne 65 - colonne 2, ligne 43 * <br> * colonne 3, ligne 8 - ligne 36 * <br> --- | 1,13,18 | |
| A | EP-A-0 376 553 (AMERICAN TELEPHONE AND TELEGRAPH COMPANY) 4 Juillet 1990 <br> * page 3, ligne 33 - page 4, ligne 11; figure 2 * <br> * page 6, ligne 30 - ligne 41; figure 5 * <br> ----- | 1,13,18 | |

| DOMAINES TECHNIQUES RECHERCHES (Int.Cl.6) |
|---|
| H04B <br> G10L |

Le présent rapport a été établi pour toutes les revendications

| Lieu de la recherche | Date d'achèvement de la recherche | Examinateur |
|---|---|---|
| LA HAYE | 20 Novembre 1995 | Bossen, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C00I)